# EUROPEAN PATENT APPLICATION

(11) **EP 2 228 583 A1**
(43) Date of publication of application: **15.09.2010**
(21) Application number: 09003705.2
(22) Date of filing: 13.03.2009
(51) Int. Cl.: F16M 11/00, F16M 11/24

(54) **Multifunctional support**

(71) Applicant: Giga-Byte Technology Co., Ltd., Taipei (TW)
(72) Inventor: Peng, Kang-Chin, Taipei 231 (TW)
(74) Representative: Brandenburger, Karin

(57) **Abstract**

A multi-function support apparatus comprises a supporting pedestal (1) and a fastening rack (2). The supporting pedestal comprises two parallel side plates (11) and a bearing surface (14) which is defined from the base of the supporting pedestal. The base of the two parallel side plates is perpendicular to the bearing surface, and a containing space is formed between the two parallel side plates for containing a base of a vertical standing computer. The bearing surface is set larger than the width of the containing space. The fastening rack comprises a base part (20) and a fixed part (21). The base part can detach from the two parallel side plates or can assemble on the to parallel side plates for rising-falling along the two parallel side plate. The fixed part can attach to the base part to fasten a liquid crystal display. The multi-function support apparatus of the present invention not only support a vertical standing computer for preventing toppling down, but also combine to use with a LCD for adjusting an angle of view of a liquid crystal display.

## Description

### BACKGROUND OF THE INVENTION

### Field of the Invention

The present invention relates to a computer peripheral, and more particularly to a multi-function support apparatus can support a vertical standing computer for preventing toppling down and also can adjust an angle of view of a liquid crystal display (LCD).

### Description of the Related Art

The desktop computer usually can be put as a vertical standing type or a horizontal lying type. While the desktop computer is put as a vertical standing type, It usually needs a stand to support for preventing toppling down. The stands can be found In the market, as those shown In the Taiwanese Patent Publication Number 541067 and 453680, they only have a simple function of supporting a computer as a vertical standing type. Once the computer is put as a horizontal lying type, the stand can not have a chance to use and there is a risk of losing to cause a waste.

### BRIEF SUMMARY OF THE INVENTION

The present invention provides a multi-function support apparatus for supporting a vertical standing computer for preventing toppling down. The multi-function support apparatus also can connect with a liquid crystal display for adjusting an angle of view of a liquid crystal display. The multi-function support apparatus comprises a supporting pedestal and a fastening rack. The supporting pedestal comprises two parallel side plates and a bearing surface which is defined from the base of the supporting pedestal. The base of the two parallel side plates is perpendicular to the bearing surface, and a containing space is formed between the two parallel side plates for containing a base of a vertical standing computer. The bearing surface is set larger than the width of the containing space. The fastening rack comprises a base part and a fixed part. The base part can detach from the two parallel side plates or can assemble on the two parallel side plates for rising-falling along the two parallel side plates. The fixed part attach to the base part for fastening a liquid crystal display.

Hence, a vertical standing computer can be supported for preventing toppling down by the two parallel side plates of the supporting pedestal and the bearing surface. Further, the supporting pedestal can detach from the liquid crystal display or assemble on the liquid crystal display through the fastening rack. Furthermore, the fastening rack has a mechanism for adjusting an angle of view of the liquid-crystal display. While the supporting pedestal combines to use with a liquid-crystal display, it can fasten the computer for increasing the stability.

Preferably, the opposite inner sides of the two parallel side plates of the supporting pedestal have spacing matching slots. The two outer sides of the base part have a plurality of spacing tenons, and a plurality of spacing tenons can infix Into a plurality of spacing matching slots of the two parallel side plates. It is easy and convenient to detach the fastening rack from the supporting pedestal separately or assemble them together through coordinating the matching slots and the tenons with each other. Besides, it is also easy and convenient to adjust an angle of view of the liquid crystal display by utilizing the tenons to infix the matching slots to the different heights

Preferably, the multi-function support apparatus according to the present invention comprises a supporting pedestal and a fastening rack. The supporting pedestal comprises a plurality of spacing matching slots The fastening rack comprises a base part and a fixed part, wherein the base part has a plurality of tenons to infix into the matching slots correspondingly, and the fixed part attach the base part to fasten a liquid crystal display. Hence, it is convenient and speedy to detach the fastening rack from the supporting pedestal or assemble them together by coordinating the matching slots and the tenons with each other. Besides, it is simple and speedy to adjust an angle of view of the liquid crystal display by utilizing the tenons to infix Into the matching slots to the different heights

### BRIEF DESCRIPTION OF THE DRAWINGS

The invention can be more fully understood by referring to the following detailed description and examples with references made to the accompanying drawings, wherein:
FIG. 1 is a schematic breakdown view according to a preferred embodiment of the present invention;
FIG. 2 is a schematic view of supporting a vertical standing computer according to a preferred embodiment of the present invention;
FIG. 3 is a schematic breakdown view of combining a liquid crystal display according to a preferred embodiment of the present invention;
FIG. 4 is a schematic view of the action of adjusting the heights of a liquid crystal display according to a preferred embodiment of the present invention;
FIG. 5 is a schematic view of the action of adjusting the angle of pitch of a liquid crystal display according to a preferred embodiment of the present invention;
FIG. 6 is a schematic diagram of the action of adjusting the angle of rotation of a liquid crystal display according to a preferred embodiment of the present invention;
FIG. 7 is a schematic cross-section view of combining a supporting pedestal and a fastening rack according to a preferred embodiment of the present invention; and
FIG. 8 is a schematic view according to another embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

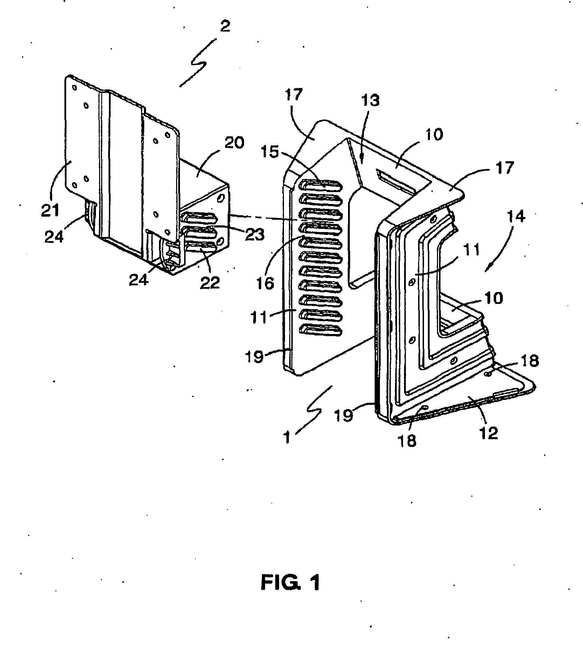

FIG. 1 illustrates a multi-function support apparatus according to a preferred embodiment of the present invention, comprising a supporting pedestal 1 and a fastening rack 2. The supporting pedestal 1 comprises two bed plates 10, two side plates 11, and two wing panels 12. The two side plates 11 are the vertical extension of the two sides of the two bed plates 10. The two side plates 11 are parallel and a containing space 13 is formed between the two parallel side plates 11 for containing a base of a vertical standing computer. The two wing panels 12 are a triangle and are the vertical extension from the two side plates 11 separately. The two wing panels 12 connect with the two bed plates 10, and a side edge of the two side plates constructs a horizontal bearing surface 14 to be placed on a desk or on the ground. The bearing surface 14 is set larger than the width of the containing space 13.

The fastening rack 2 comprises a base part 20 and a fixed part 21. The base part 20 can detach from the two parallel side plates 11 or can assemble on the two parallel side plates 11 for rising-falling along the two parallel side plates 11. The fixed part 21 attach to the base part 20 to fasten a liquid crystal display.

Please refer to the FIG. 1, the opposite inner sides of the two parallel side plates of the supporting pedestal 1 have a plurality of inclination bumps 15 and a plurality of matching slots 16. The matching slots 16 are formed separately between the bumps 15. The two outer sides of the base part 20 have a plurality of spacing inclination tenons 22 and a plurality of notches 23. The notches 23 are formed separately between the tenons 22. A plurality of tenons 22 of the base part 20 can infix into the matching slot 16 of the side plates 11, and a plurality of notches 23 can put on the corresponding a plurality of bumps 15.

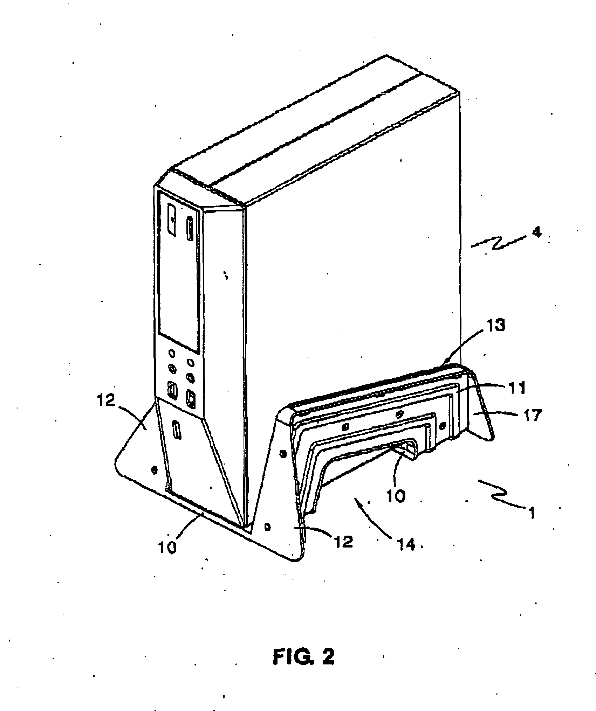

FIG. 2 illustrates the bearing surface 14 of the supporting pedestal 1, which can be placed on a desk or on the ground horizontally. The top and the two ends of the containing space 13 of the side plates 11 are opening for putting a vertical standing computer. The base of the vertical standing computer can be put Into the containing space13 and be placed In between the two side plates 11. Hence, the vertical standing computer 4 can be supported by the larger bearing surface 14 and the two side plates 11 to prevent inclining to left or right side.

Please refer to the FIG. 2. The supporting pedestal 1 further comprises two small wing panels 17. The two small wing panels 17 are a triangle and are extended from said two side plates 11 vertically. A side edge of the two small wing panels is arranged on the bearing surface 14 for increasing the power of support and the stability while placing on the desk or the ground.

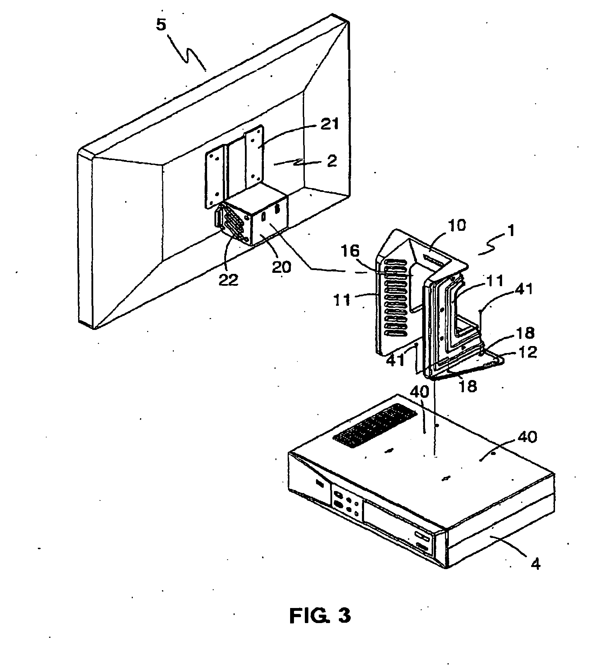

FIG. 3 illustrates the two wing panels 12 of the supporting pedestal 1 has a plurality of mounting holes 18. The top of a lying type computer 4 has a plurality of threaded holes 40. Utilizing a plurality of screws thread the mounting holes 18 to screw the screws to the threaded holes 40 to make the supporting pedestal 1 standing fixed to the computer 4. While a liquid crystal display 5 combine with the fixed part 21 of the fastening rack 2, a plurality of tenons 22 of the base part 20 can infix into the matching slots 16 of the two side plates 11 to reach the purpose of conveniently and speedily detaching the liquid crystal display 5 from the supporting pedestal 1 separately or assembling them together.

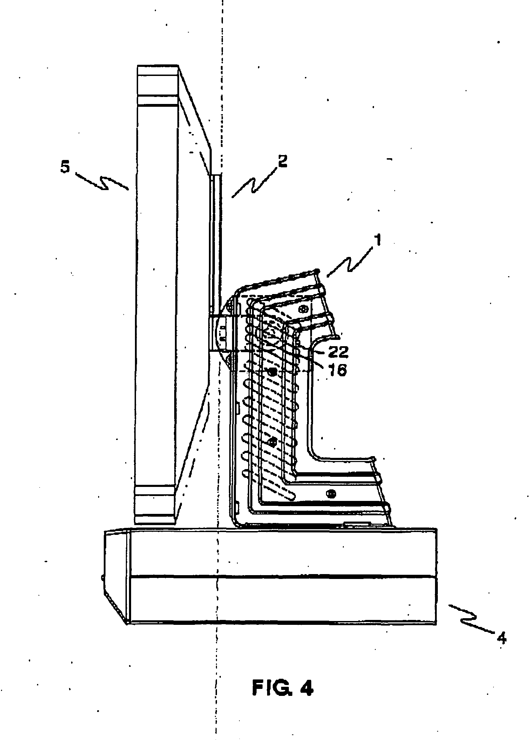

Please refer to the FIG. 3 and FIG. 4. The tenons 22 can infix into the matching slot 16 of the side plates 11 to the different heights for adjusting an angle of view of a liquid crystal display 5 according to the present invention.

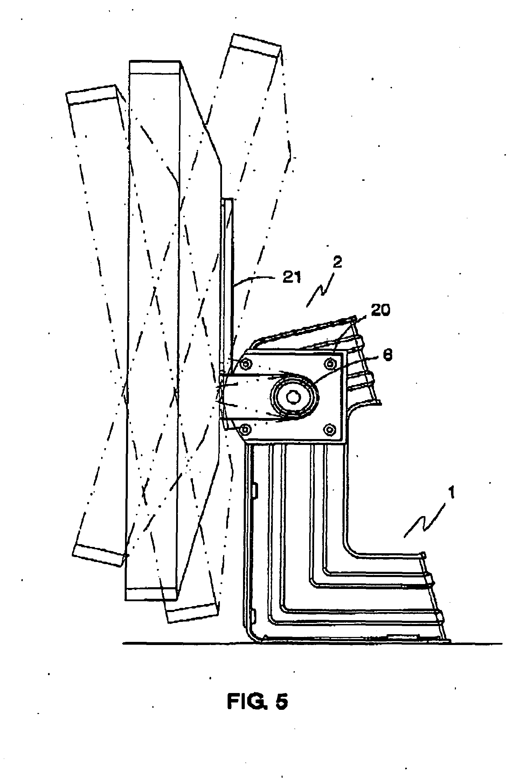

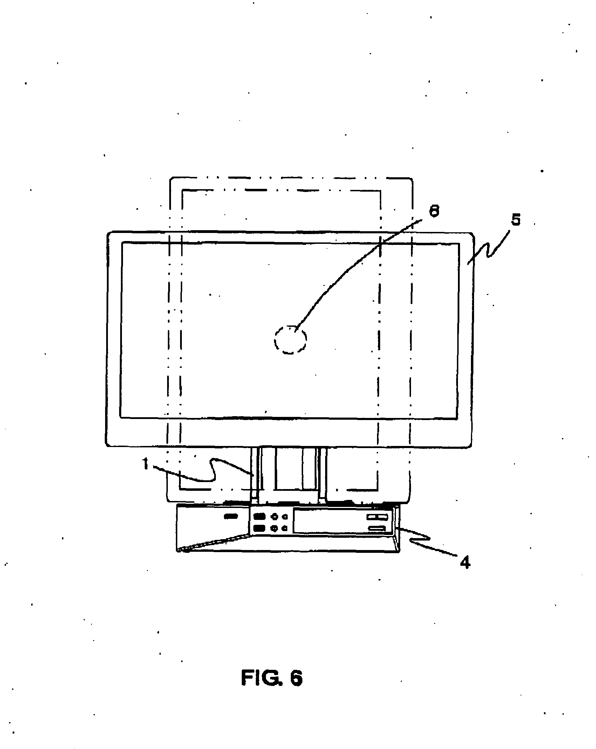

FIG. 5 and Fig. 6 Illustrate a connection mechanism 6 existed between the fixed part 21 of the fastening rack 2 and the base part 20. The fixed part 21 can adjust an angle of pitch or the angle of 3-axes (or the angle of rotation) from the base part 20 by the connection mechanism 6. To reach the angle adjustment, the connection mechanism 6 can be a hinge mechanism or a universal mechanism (cardan).

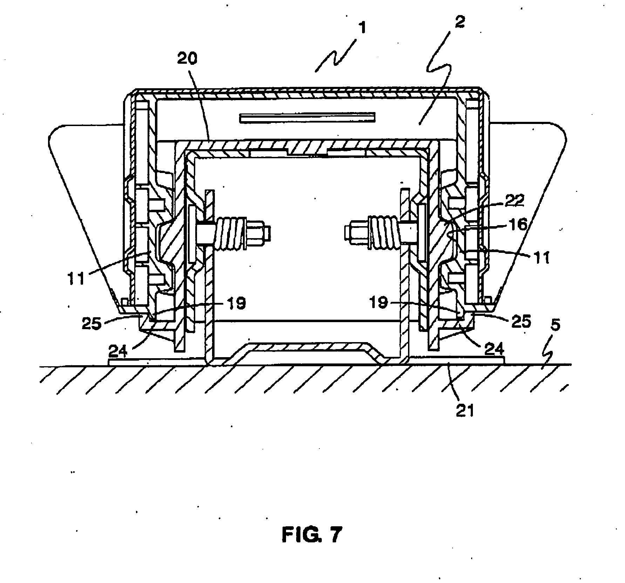

FIG. 7 illustrates the two side plates 11 of the supporting pedestal 1 having a rib 19. The two sides of the base part 20 of the fastening rack 2 separately have a stop 24. While the tenons 22 infix into the matching slots 16, the stop 24 can block the rib 19. In addition, the two stops 24 separately have a hook 25 for hooking the outer side of corresponding rib 19 to prevent the two side plates 11 stretching out or deforming while adjusting the angle of view of a liquid crystal display 5.

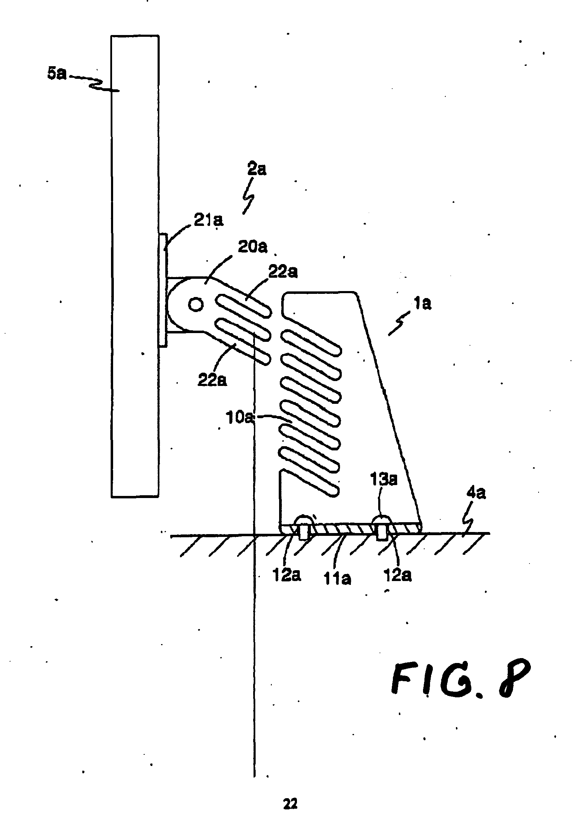

FIG. 8 illustrates another preferred embodiment of the present invention. The multi-function support apparatus of the present invention comprises a supporting pedestal 1a and a fastening rack 2a. The supporting pedestal 1a has a plurality of spacing matching slots 10a, and the matching slots 10a slope down a little and the top of the matching slots 10a is opening. The supporting pedestal 1a has two wing panels 11a, and the two wing panels 11a have a plurality of mounting holes 12a for providing a plurality of screw 13a threading through to screw on a computer 4a. The supporting pedestal 1a in the present embodiment invention can also be a monolithic module for supporting a liquid crystal display 5a

The fastening rack 2a has a base part 20a and a fixed part 21a. The base part 20a has a plurality of tenons 22a to infix into the matching slots 10a correspondingly. The fixed part 21 a is capable of fastening a liquid crystal display 5a, and the fixed part 21a is capable of swinging to attach to the base part 20a to adjust the swinging angle of the fixed part 21a on the base part 20a. Hence, the design of infixing a plurality of tenons 22a into the matching slots 10a can reach the purpose of conveniently and speedily assembling the liquid crystal display 5a and supporting pedestal 1a together or detaching the liquid crystal display 5a from supporting pedestal 1a separately. Further, by way of infixing the tenons 22a into the matching slots 10a to the different heights can adjust an angle of view of the liquid crystal display 5a easily and speedily.

According to the present invention, the supporting pedestal not only can mount on a computer, but also can mount on a desk or a base.

The above description is given by way of example, and not limitation. Given the above disclosure, one skilled in the art could devise variations that are within the scope and spirit of the invention disclosed herein. Including configurations ways of the recessed portions and materials and/or designs of the attaching structures. Further, the various features of the embodiments disclosed herein can be used alone, or In varying combinations with each other and are not intended to be limited to the specific combination described herein. Thus, the scope of the claims is not to be limited by the illustrated embodiments.

## Claims

1. A multi-function support apparatus, comprising:
a supporting pedestal, comprising two parallel side plates and a bearing surface defined from the base of said supporting pedestal, the base of said two parallel side plates is perpendicular to said bearing surface, and a containing space is formed between said two parallel side plates for containing a vertical standing computer; and
a fastening rack, comprising a base part and a fixed part, said base part is detachable from said two parallel side plates or assemble on said two parallel side plates for rising-falling along said two parallel side plates, and said fixed part attach to said base part for fastening a liquid crystal display (LCD).

2. The multi-function support apparatus as claimed in claim 1, wherein said fixed part Is swinging to attach to said base part to form a swinging angle and said swinging angle is adjustable.

3. The multi-function support apparatus as claimed in claim 1 or 2, wherein said supporting pedestal comprises a bed plate and two wing panels, said bed plate Is on the base of said supporting pedestal and connects with said two parallel side plates, and said two wing panels are extended from said two parallel side plates vertically, and a side edge of said two wing panels and said two parallel side plates constructs said bearing surface.

4. The multi-function support apparatus as claimed in claim 3, wherein the opposite inner sides of said two parallel side plates have a plurality of spacing matching slots, and the two outer sides of said base part have a plurality of spacing tenons, and said a plurality of spacing tenons can infix into said a plurality of spacing matching slots.

5. The multi-function support apparatus as claimed in claim 4, wherein said two wing panels have a plurality of mounting holes for screwing screws to a computer or a base.

6. The multi-function support apparatus as claimed in claim 5, wherein said supporting pedestal further comprises two small wing panels, which extend from said two parallel side plates vertically and a side edge of said two small wing panels is on said bearing surface.

7. A multi-function support apparatus, comprising:
a supporting pedestal, comprising a plurality of spacing matching slots; and
a fastening rack, comprising a base part and a fixed part, said base part having a plurality of tenons to infix into said a plurality of spacing matching slots correspondingly, and said fixed part attach to said base part to fasten a liquid crystal display (LCD).

8. The multi-function support apparatus as claimed in claim 7, wherein said fixed part is swinging to attach to said base part to form a swinging angle and said swinging angle is adjustable.

9. The multi-function support apparatus as claimed in claim 8, wherein the opposite inner sides of said two parallel side plates have a plurality of spacing bumps to form said matching slots between said spacing bumps, and the two outer sides of said base part have a plurality of spacing tenons to form a plurality of notches, and said a plurality of notches can put into said a plurality of spacing bumps.

10. The multi-function support apparatus as claimed In claim 8, wherein said supporting pedestal comprises two wing panels, said wing panels having a plurality of mounting holes for screwing screws to a computer or a base.
